# FASCICULE DE BREVET EUROPEEN

(11) **EP 0 692 130 B1**
(45) Date de publication et mention de la délivrance du brevet: **21.05.1997**
(21) Numéro de dépôt: 93908991.8
(22) Date de dépôt: 02.04.1993
(51) Int. Cl.: G09B 29/10

(54) **SYSTEME DE GUIDE VOCAL TOURISTIQUE ELECTRONIQUE**
SYSTEM MIT ELEKTRONISCHER VERBALER TOURISTISCHER ANWEISUNG
ELECTRONIC TOURIST VOICE GUIDE SYSTEM

(43) Date de publication de la demande: 17.01.1996
(73) Titulaire: Parienti, Raoul, 06000 Nice (FR); Bariou, Marcel, 91120 Palaiseau (FR)
(72) Inventeur: Parienti, Raoul, 06000 Nice (FR); Bariou, Marcel, 91120 Palaiseau (FR)
(74) Mandataire: Bonneau, Gérard
(86) Numéro de dépôt international: FR9300338
(87) Numéro de publication internationale: WO9320546

(56) Documents cités:
- WO-A-90/08373
- DE-A- 4 033 837
- GB-A- 2 197 736
- US-A- 5 067 081

## Description

La présente invention a pour objet un dispositif de guide vocal électronique destiné indifféremment à la promenade touristique ou au déplacement professionnel. Il constitue un guide touristique ou thématique commenté, de la zone géographique dans laquelle il se trouve, capable de se localiser, il permet d'accéder aux informations liées à ladite zone, en fonction des thèmes demandés par l'utilisateur.

L'invention est destinée à compléter, voire à remplacer le guide sous forme de livre, de carte géographique, comme support d'informations et moyen d'accès à celles-ci, tout en offrant des fonctionnalités nouvelles :
- recherche automatique des informations thématiques, à la demande de l'utilisateur, liées à la position géographique de l'invention à un instant donné,
- identification du lieu où se trouve l'invention,
- aide à la localisation des lieux de destination choisis.

Jusqu'à ce jour, malgré les progrès de l'électronique et de l'informatique, il ne peut être utilisé couramment pour s'informer sur une itinéraire, un site, un gîte et se repérer, s'orienter, quelque soit le mode de locomotion, que le support papier : guide, livre, carte, etc...

Au cours des dernières années, quelques expérimentations et axes de recherche mettant en oeuvre, diverses technologies de stockage, de recherche d'informations géographiques et de visualisation de celles-ci sous forme graphique ou alphanumérique, ont été conduites. Elles utilisaient indifféremment, ensemble ou séparément, des communications par satellites, des bornes interactives, du stockage d'informations sur des supports de masse de haute densité, des dispositifs de visualisation sur écrans, des interfaces homme-machine plus ou moins élaborés.

Les outils résultants permettent de se localiser sur une carte géographique apparaissant à l'écran sans y associer la richesse de l'information d'un guide touristique et de la promotion des services afférents.

Sans réelles retombées économiques, l'ensemble de tous ces systèmes complexes et peu intégrés, se limite à des objets expérimentaux, cristallisant l'état de l'art à un moment donné.

D'autres applications ont également été développées à des fins de repérage cartographique et de navigation. Les brevets US-A-5 067 081 ou DE-A-4 033 837 décrivent bien ce type d'application.

Ces produits présentent peu d'intérêt en matière d'usage grand public, du fait de leur coût élevé compte tenu du marché restreint, de la difficulté de leur mise en oeuvre et de leur ergonomie peu adaptée.

L'invention présentée ci-après, a pour but de remédier à tous ces inconvénients. En effet, l'invention décrite dans le présent brevet consiste en un produit grand public et convivial, qui permet à tout en chacun de disposer d'un véritable guide vocal au cours de ses déplacements, à l'instar d'un compagnon de voyage savant et dévoué, capable sur simple demande de situer le service le plus proche, tel qu'hôtel, restaurant, aire de repos, point de vue, site historique ou tout autre attraction touristique ou d'intérêt général, associé à un descriptif sommaire. La réalisation de cette invention permet de mobiliser les services concernés, assurant ainsi la viabilité économique du produit. En effet, tous les commerces et services d'une aire géographique donnée seront invités à communiquer un message bref, afin de décrire leurs activités et particularités, à l'instar d'un annuaire téléphonique. Une information plus riche et plus valorisante pourra faire l'objet d'un contrat onéreux. Cette approche, compte tenu des intérêts financiers mis en jeu et combinée à l'attente du public en matière d'informations, favorisera le développement de l'invention.

Celle-ci, suffisamment miniaturisée et intégrée, s'avère être un objet portatif, voire de poche, dotée d'une interface homme-machine simple et conviviale, elle permet:
- de rechercher en base de données des informations diverses, relatives à l'environnement immédiat de la position extraite et de les fournir sur demande à l'utilisateur, via l'interface homme-machine,
- d'exploiter une base de données d'informations de grande capacité et multimédia (associant le texte, l'image et le son) tout en restant de faible encombrement,
- de dialoguer avec l'utilisateur par le biais d'une interface homme-machine mettant en oeuvre simultanément ou non et indifféremment, une chaîne d'analyse et de synthèse vocale, un clavier, un écran plat à grille tactile configurable à la demande.
- de traiter des signaux issus de satellites de positionnement terrestre et d'extraire sa position en conséquence, à quelques mètres près.

L'invention est, en fait, le résultat de la conjonction judicieuse des éléments suivants :
- un système de réception de signaux émis par une constellation de satellites et permettant une localisation géographique,
- un système de réception de signaux radiofréquence,
- un lecteur de mémoire de masse, tel qu'un disque optique numérique, ou une mémoire statique de grande capacité,
- un système d'analyse et de synthèse vocale permettant à l'utilisateur qui a choisi un thème, par le biais d'une requête, d'entendre le commentaire en réponse à la requête et relatif à la zone localisée par le récepteur de positionnement terrestre,
- un dispositif associant, écran plat et grille tactile, facilitant ainsi la création d'interface homme-machine très versatile, dont l'association pertinente offre des fonctionnalités intégrées dans un boîtier qui, miniaturisé, deviendra un objet familier, de très faible encombrement, portatif voire de poche, et susceptible de répondre aux besoins d'un vaste marché à l'instar du baladeur.

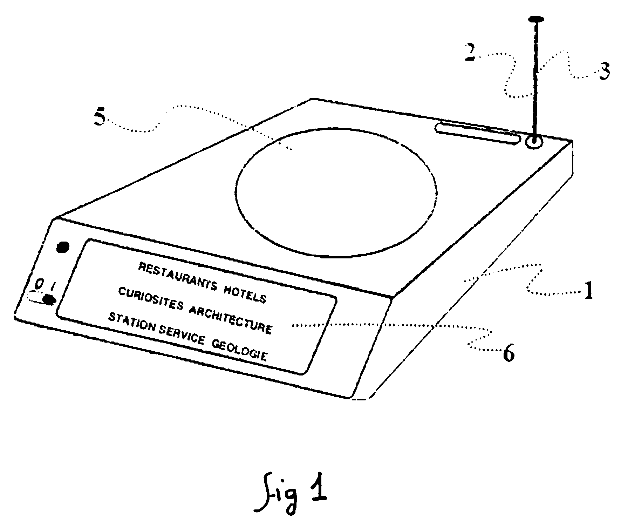

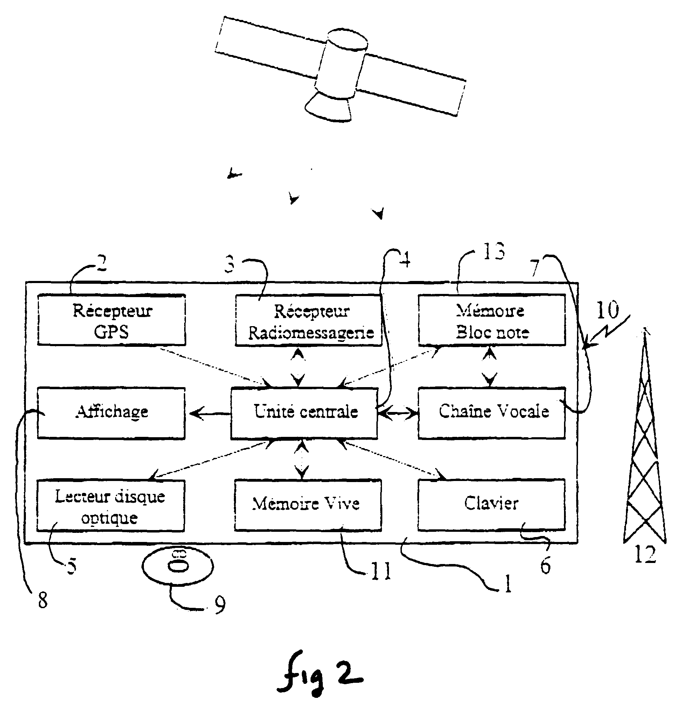

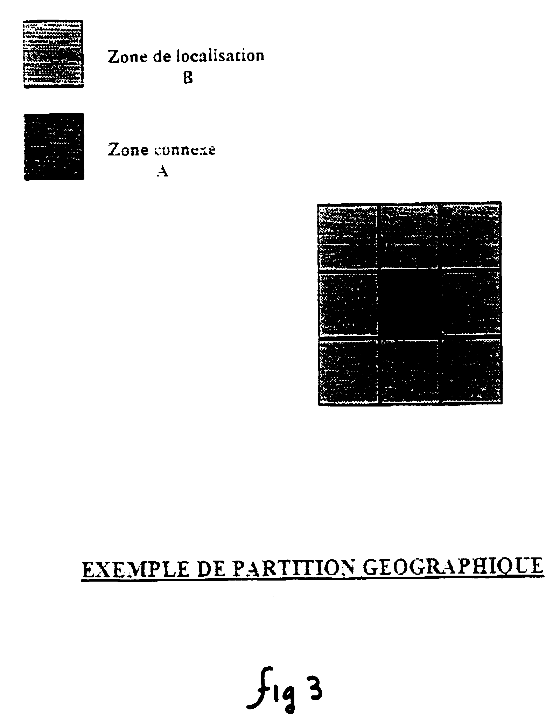

La figure 1, planche 1/3 montre l'aspect de l'invention., la figure 1 planche 2/3, montre un synoptique de l'invention dans son ensemble.

L'invention sera caractérisée, entre autres, en ce que le disque optique sera formaté selon une partition géographique adéquate, permettant un accès sélectif et rapide à l'information liée à la zone géographique et aux zones immédiatement connexes correspondants à la localisation géographique où se fait la demande. Seule la zone et les zones connexes concernées par la localisation sera ou seront enregistrées en mémoire vive, pour permettre un accès immédiat à l'information et ménager la cinématique du lecteur de disque.

Suite à toute demande d'informations, les modifications de zones en mémoire dynamique seront automatiquement prises en compte en intégrant le déplacement, la direction, le sens, la vitesse.

Les informations fournies vocalement ou affichées sur écran, teindront compte en conséquence du déplacement de l'invention et de la dynamique du déplacement, vitesse et sens, dans la zone géographique dont les données descriptives sont en mémoire vive.

En outre, la mémoire vive (11) de l'invention va enregistrer les données émises par un émetteur radio FM ou radio téléphone cellulaire. En conséquence, l'invention dispose de deux sources d'information :-
- un disque optique numérique(9), ou toute autre support de mémoire de masse statique, sur lequel sont mémorisées en base de données les informations durables, de nature touristique, tels que : hôtels, restaurants, ouvrages d'art, curiosités touristiques, bases de loisirs, points d'approvisionnement et de commerce, thèmes spécifiques à la zone géographique donnée (faune, flore, histoire...) et toute information touristique relative à une zone géographique donnée,
- une radiomessagerie qui fournira les informations locales propres aux régions traversées et de nature relativement éphémère, annonces, publicités, promotions, manifestations, etc...

La radiomessagerie qui fournit les informations locales, utilise avantageusement le réseau de téléphonie cellulaire, analogique ou numérique qui équipe l'ensemble des pays industrialisés. A cet effet, un ou plusieurs des canaux de l'émetteur couvrant une zone géographique définie, seront dédiés périodiquement pour la transmission de données. Le ou les canaux de radiotéléphonie cellulaire dédiés à la transmission de données, destinée au guide vocal, seront caractérisés par un signal spécifique, lequel signal est reconnu par le guide vocal. Ce signal peut être une fréquence caractéristique, ou une donnée spécifique qui, reconnue par le guide, permet de déclencher la procédure de mémorisation des données sur la mémoire vive de l'invention.

L'invention dispose d'une interface homme-machine, tel qu'un clavier configurable de type écran à grille tactile, permettant à l'utilisateur de choisir son thème d'intérêt au moyen de menus déroulants et en s'appuyant sur un thésaurus relatif aux informations contenues dans le disque optique numérique, le clavier configurable (6) de l'appareil (1) est conçu pour afficher en permanence les thèmes touristiques liés à la zone traversée, et permet également de visualiser le texte énoncé par la chaîne de synthèse vocale (7).

Le dessin annexé de la planche 3/3, présente une organisation non exhaustive du découpage en zone géographique et donne une définition des zones connexes : A, à la zone principale : B où est localisée l'invention, la taille des zones élémentaires du maillage sera fournie de la richesse des informations propres aux zones. L'invention est capable de lire un disque optique numérique, sur lequel sont mémorisées en base de données, toute information à l'instar d'un guide touristique et les points de repère majeurs, tels que : voies de circulation, rivières, fleuves, lieux-dits....

La base de données d'informations est organisée en partition de zones, selon le dessin de la Planche 3/3. Les objets significatifs décrits en base de données, possèderont dans leur description leur localisation exacte.

Selon les informations souhaitées, types, thèmes, régions...., la radiomessagerie fournira des informations locales, propres aux régions traversées et de nature relativement éphémère, annonce, publicité, promotion, etc...

Sur la requête, par l'utilisateur, d'une information, (par exemple, les restaurants proches et situés dans une fourchette de distance inférieure à 5 km), l'appareil pourra afficher successivement sur sa façade avant, les réponses idoines, relatives au périmètre concerné dans l'ordre croissant des distances, et/ou les énumérer vocalement, grâce à sa chaîne de synthèse de la parole.

A la demande de l'utilisateur, l'invention sera capable de hiérarchiser le niveau de détails de l'information communiquée, l'organisation préalable de celle-ci sur le support de masse permettant un arbitrage de l'accès, selon le niveau de précision souhaité pour le renseignement. Ces informations sont de nature très diverse, numéro de téléphone, menus proposés, localisation géographique, etc...

Selon un autre mode de fonctionnement de l'invention, l'information sera communiquée à l'utilisateur sans que ce dernier ait à effectuer des requêtes. Ce mode de fonctionnement déclenché par l'utilisateur, par le biais d'une procédure quelconque, permettra de porter à la connaissance de l'utilisateur l'information classée hiératiquement dans la base de données, comme la plus significative ou la plus intéressante, du lieu où se trouve l'appareil.

Dans les versions plus sophistiquées du système, un écran à cristaux liquide sera adjoint à l'appareil, afin d'associer l'image au son, ainsi l'image de tel restaurant, ou le cadre de tel hôtel, pourra être visualisé sur l'écran, ces images ayant été préalablement enregistrées sur disque optique et organisées en base de données. L'invention capable de se localiser en permanence, grâce au récepteur du système de positionnement terrestre, va rechercher automatiquement les informations relatives à la requête, sur le disque numérique dans la zone où elle se localise et dans les zones connexes concernées. En outre, ces informations pourront être enrichies par des informations locales, fournies par radiomessagerie et par un enregistrement vocal réalisé par l'utilisateur.

En effet, l'appareil dispose d'une mémoire (13) "bloc notes" prévue pour mémoriser un message énoncé par l'utilisateur et auquel sera associé automatiquement, le lieu de l'enregistrement, de sorte que, à la demande de l'utilisateur, l'appareil restitue automatiquement ledit message lorsqu'il se trouve au lieu-dit de l'enregistrement.

Rappelons que les données exploitables auront deux sources possibles :
- le disque optique numérique, pour les données stables dans le temps. de caractère général et peu susceptibles de modifications, mais pouvant donner lieu à des rééditions actualisées et enrichies périodiquement.
- la radiomessagerie pour des données de nature très locale et de validité limitée dans le temps.

En conséquence, leur génération et leur diffusion obéiront à des règles très distinctes.

Le disque optique numérique sera la compilation des informations classiquement diffusées par les guides touristiques, voire les guides thématiques (faune, flore, vins, histoire...), dédiées à une région donnée. Selon la richesse et le volume des informations compilées, il sera réalisé toute une collection de disques, par thème et en plusieurs langues, faisant l'objet de rééditions actualisées.

La radiomessagerie fournira des données de nature publicitaire ou promotionnelle relative à des services et des manifestations de tout type, leur intérêt reste circonscrit à une zone géographique limitée. Leur préparation est prise en charge par des opérateurs de radiotéléphonie cellulaire ou de radiodiffusion traditionnelles. Ces informations de nature évolutive, sont émises :
- par un réseau de radiotéléphonie cellulaire qui peut consacrer périodiquement une fréquence sur n, durant des périodes très brèves pour envoyer un ensemble de données réactualisées en temps réel (spectacles, curiosités, publicités...),
- éventuellement, par des émetteurs FM, diffusant des programmes traditionnels de radio, par le biais de sous porteuses, à l'instar du dispositif "Européen Radio Data Système".

Si on considère un émetteur radiocellulaire disposant de deux cents cinquante canaux devant transmettre l'équivalent de deux pages de texte de 2 K.octets, toutes les cinq minutes, le temps réservé à cette transmission serait de quatre secondes environ pour un débit de 9600 bauds et le pourcentage d'occupation du relais de l'ordre de 0,05%.du temps total d'émission. Ceci montre la réelle disponibilité du réseau de téléphonie cellulaire, pour ce type d'application. D'autre part, selon une autre version de l'invention, ou dans le cas ou la réception de signaux satellitaire de positionnement ferait défaut, une localisation moins précise pourrait toutefois être conduite par l'exploitation de l'adresse du réseau cellulaire. En effet, l'évolution des réseaux radiocellulaires vers des supports de transmission numérique, avec des fréquences élevées (900 MHz pour l'Europe) a imposé une multiplication des cellules, compte tenu de la faible portée de ce support de communication. Or chaque relais d'émission est pourvu d'un code d'identification qui est transmis en permanence. Par conséquent, il est aisé d'obtenir un repérage relatif en identifiant le relais le plus proche et par voie de conséquence, sa position géographique et sa zone de couverture, grâce à une table de correspondance.

L'amplitude du signal radio dépendant de la puissance de l'émetteur (constant a priori) et de la distance (variable) qui le sépare de ce dernier, une analyse de l'amplitude des signaux radiotéléphones cellulaires, des relais connexes, du relais le plus proche de l'appareil, dont les lois d'évolution sont connues, permet d'obtenir une localisation, certes moins précise qu'avec le système de positionnement satellitaire, mais pouvant être suffisante.

Ainsi localisée, l'invention pourra être utilisée comme décrit précédemment avec une finesse moindre.

Selon un mode de réalisation non exhaustif, l'appareil (1) va intégrer :
- un récepteur de système de positionnement terrestre (2), ledit système est conçu pour définir une position sur le globe terrestre à quelques mètres près,
- un récepteur de radiomessagerie (3) susceptible de recevoir des signaux radiofréquence (10) véhiculant des données générales ou électives, issues des bases d'émission radiocellulaire ou de radiodiffusion traditionnelle,
- un lecteur de disque optique (5) qui permettra d'accéder à la mémoire de masse constituée par le disque optique (9),
- un écran d'affichage (8) qui, doté d'une grille tactile, configurable et apportant des fonctions complémentaires au clavier (6), affichera les informations demandées,
- une chaîne d'analyse et de synthèse de la parole (7) susceptible de répondre aux requêtes sous forme vocale,
- une mémoire "bloc note" (13) permettant d'enregistrer un message de l'utilisateur via le microphone de la chaîne vocale (6), lequel message est associé à la localisation définie par le récepteur de positionnement terrestre au moment de l'enregistrement,
- un clavier configurable (6) permettant l'entrée des données ou des requêtes,
- une unité centrale (4) gérant l'ensemble, ladite unité sera entre autres pourvue d'une mémoire vive (11), ladite mémoire vive (11) va mémoriser les données de la mémoire de masse (9) en se limitant à la zone dans laquelle se trouve le récepteur de positionnement terrestre immédiatement connexe, le changement de zone de localisation engendrera dynamiquement la modification du contenu de la mémoire vive (11), par un nouvel accès la mémoire de masse, selon un choix des zones, qui intégrera les caractéristiques dynamiques du mouvement vitesse et sens du déplacement, la mémoire vive (11) permettra d'avoir un accès immédiat à l'information et de ménager la cinématique du lecteur de disque (5), lors des requêtes de l'utilisateur.

Grâce à sa simplicité de mise en oeuvre, son volume réduit, son faible coût de revient, le dispositif, objet de l'invention qui vient d'être décrite, peut trouver ses applications dans tous les domaines appelant la conjonction d'une ou de plusieurs informations liées à un site donné, lui-même pouvant être localisé géographiquement automatiquement par ladite invention. Les applications, connues à ce jour, appelant la plus grande diffusion relèvent de l'information touristique et culturelle et de la promotion des services dans une zone géographique donnée.

L'intégration et l'association des différents éléments constitutifs de l'invention, la faible taille du dispositif (portatif voire de poche), l'ergonomie, l'organisation structurée des données, selon des critères de partitions de zones, l'exploitation de supports de diffusion d'informations très répandus et de grande capacité, tel que le disque optique numérique, donne à ce dispositif un maximum d'effets utiles, n'ayant pas été proposés, à ce jour.

Les formes, dimensions et dispositions des différents éléments, ainsi que matières utilisées pour leur fabrication, pourront varier dans la limite des équivalents, sans changer pour cela, la conception générale de l'invention qui vient d'être décrite.

## Revendications

1. Système de guide vocal touristique électronique constitué par une pluralité d'appareils (1) intégrant :
- un système de réception de signaux émis par une constellation de satellites (2) et permettant une localisation géographique,
- un système de réception de signaux radiofréquence (3),
- un lecteur de disque optique numérique (5),
- un clavier configurable doté d'un écran à grille tactile ou non (6), caractérisé en ce que ladite invention dispose d'un dispositif de communication homme-machine, essentiellement constitué par une chaîne de synthèse, d'analyse vocale (7) et d'enregistrement, laquelle chaîne est capable d'exploiter deux sources d'informations:
- un disque optique numérique (9) ou toute autre mémoire de masse statique, sur lequel sont mémorisées en base de données les informations durables, de nature touristique, tels que : hôtels, restaurants, ouvrages d'art, curiosités touristiques, bases de loisirs, points d'approvisionnement et de commerce etc...,
- une radiomessagerie qui fournira les informations locales propres aux régions traversées et de nature relativement éphémères, annonces, publicités, promotions, manifestations, etc...,
de manière que les deux sources d'informations précitées, soient gérées par une unité centrale (4), ladite unité, sera entre autres pourvue d'une mémoire vive (11), ladite mémoire vive va mémoriser électivement les données de la mémoire de masse, tel qu'un disque optique numérique, en se limitant à la zone dans laquelle se trouve l'appareil (1) localisé par le récepteur de positionnement terrestre intégré (2), ainsi que l'intégralité des données nécessairement locales reçues depuis la radiomessagerie.
L'ensemble des données est classé par thème et mémorisé dans la mémoire vive, l'utilisateur va, après une requête, via la chaîne de synthèse vocale, entendre le commentaire relatif au thème choisi par l'utilisateur sur la zone concernée.

2. Système de guide vocal touristique électronique selon la revendication 1 caractérisé en ce que le réseau de radiotéléphonie cellulaire, support de la radio messagerie (3), consacre périodiquement une fréquence sur n, durant des périodes très brèves pour envoyer des données d'informations réactualisées en temps réel, tel que : spectacles, curiosités, manifestations, etc...

3. Système de guide vocal touristique électronique selon la revendication 1 caractérisé en ce que l'appareil (1) dispose d'une mémoire (13) prévue pour mémoriser un message énoncé par l'utilisateur et auquel sera associé automatiquement, le lieu de l'enregistrement, de sorte que, à la demande de l'utilisateur, l'appareil restitue automatiquement ledit message lorsqu'il se trouve au lieu-dit de l'enregistrement.

4. Système de guide vocal touristique électronique selon les revendications 1 et 2 caractérisé en ce qu'une localisation de l'appareil (1) est obtenu, grâce au code identifiant émis en permanence par le relais de l'émetteur (12) radiocellulaire. associé à une table de correspondance faisant correspondre à chaque relais identifié par son code, sa zone de couverture géographique.

5. Système de guide vocal touristique électronique selon les revendications 1, 2 et 3 caractérisé en ce que la localisation de l'appareil est réalisée dans le cas ou ce dernier est dépourvu du système de repérage satellitaire, ou en cas de défaillance de ce dernier par une analyse de l'amplitude des signaux (10) de radiotéléphonie cellulaire des relais connexes du relais le plus proche.

6. Système de guide vocal touristique électronique selon la revendication 1 caractérisé, en ce que la cinématique du lecteur de disque (5) est ménagé, grâce à l'enregistrement dans la mémoire vive (4), des données relatives à la zone concernée par la localisation.

7. Système de guide vocal touristique électronique selon la revendication 1 caractérisé, en ce que le clavier configurable (6) de l'appareil (1) est conçu pour afficher en permanence les thèmes touristiques liés à la zone traversée, et permet également de visualiser le texte énoncé par la chaîne de synthèse vocale (7).

8. Système de guide vocal touristique électronique selon la revendication 1 caractérisé en ce que l'appareil (1) communique automatiquement l'information, classée hiératiquement dans la base de données, comme la plus significative ou la plus intéressante, du lieu où se trouve l'appareil.

9. Système de guide vocal touristique électronique selon les revendications 1 et 2, caractérisé en ce que la mémoire vive (11) de l'appareil va enregistrer les données émises par un émetteur radio FM ou cellulaire (12).

10. Système de guide vocal touristique électronique selon la revendication 1 caractérisé en ce que l'appareil (1) intègre un écran capable, d'afficher les images des sujets touristiques demandés, stockées sur disque numérique (9).

## Patentansprüche

1. Elektronisches touristisches Sprechleitsystem, bestehend aus einer Vielzahl von Geräten (1), in die integriert sind:
- ein System zum Empfang von Signalen, die von einer Satellitenkonstellation (2) gesendet werden und eine geographische Ortung gestatten,
- ein System zum Empfang von Funkfrequenzsignalen (3),
- ein Leser für optische digitale Platten (5),
- eine konfigurierbare Tastatur mit einem Bildschirm mit Tastrost oder nicht (6), dadurch gekennzeichnet, daß die Erfindung über eine Vorrichtung zur Kommunikation Mensch-Maschine verfügt, die im wesentlichen aus einer Synthese-, Sprachanalyse- (7) und Aufzeichnungskette besteht, die zwei Informationsquellen auswerten kann:
- eine digitale optische Platte (9) oder jeden anderen statischen Massenspeicher, auf dem als Datenbasis die dauerhaften Informationen touristischer Art gespeichert sind, wie Hotels, Restaurants, Kunstwerke, touristische Sehenswürdigkeiten, Freizeitzentren, Versorgungs- und Einkaufsstellen usw..
- eine Funkmeldezentrale, die die lokalen Daten relativ vorübergehender Art liefert, die die durchquerten Regionen betreffen, wie Meldungen, Werbung, Angebote, Veranstaltungen, usw.,
so daß die genannten Informationsquellen von einer Zentraleinheit (4) verwaltet werden, die unter anderem mit einem Lebendspeicher (11) ausgerüstet ist, der aufgrund einer Wahl die Daten des Massenspeichers, wie einer digitalen optischen Platte, speichert, indem er sich auf die Zone beschränkt, in der sich das durch den integrierten Erdpositionierungsempfängers geortete Gerät (1) befindet, sowie die Gesamtheit der von der Funkmeldezentrale empfangenen, notwendigerweise lokalen Daten.
Die Gesamtheit der Daten wird nach Themen geordnet und im Lebendspeicher gespeichert, der Benutzer hört nach einer Anfrage über die Sprachsynthesekette den Kommentar, der das vom Benutzer gewählte Thema betrifft, über die betreffende Zone.

2. Elektronisches touristisches Sprechleitsystem nach Anspruch 1, dadurch gekennzeichnet, daß das Mobilfunknetz, der Träger der Funkmeldungen (3), periodisch eine von n Frequenzen während sehr kurzer Perioden zur Verfügung stellt, um in Echtzeit reaktualisierte Informationsdaten wie Aufführungen, Sehenswürdigkeiten, Veranstaltungen usw. zu senden.

3. Elektronisches touristisches Sprechleitsystem nach Anspruch 1, dadurch gekennzeichnet, daß das Gerät (1) über einen Speicher (13) verfügt, der vorgesehen ist, um eine vom Benutzer gesprochene Meldung zu speichern, der automatisch der Ort der Aufzeichnung zugeordnet wird, so daß das Gerät auf Verlangen des Benutzers automatisch diese Meldung wiedergibt, wenn es sich an dem genannten Ort der Aufzeichnung befindet.

4. Elektronisches touristisches Sprechleitsystem nach Anspruch 1 und 2, dadurch gekennzeichnet, daß eine Ortung des Geräts (1) durch den identifizierenden Code erhalten wird, der ständig von dem Relais des Mobilfunksenders (12) gesendet wird, dem eine Vergleichstafel zugeordnet ist, die jedem durch seinen Code identifizierten Relais seine geographische Überdeckungszone zuordnet.

5. Elektronisches touristisches Sprechleitsystem nach den Ansprüchen 1, 2 und 3, dadurch gekennzeichnet, daß die Ortung des Geräts in dem Fall, in dem es kein Satellitenortungssystem aufweist, oder im Fall von dessen Ausfall durch eine Analyse der Amplitude der Mobilfunksignale (10) der dem nächsten Relais benachbarten Relais vorgenommen wird.

6. Elektronisches touristisches Sprechleitsystem nach Anspruch 1, dadurch gekennzeichnet, daß die Kinematik des Plattenlesers (5) durch die Aufzeichnung der Daten, die sich auf die von der Ortung betroffene Zone beziehen, im Lebendspeicher (4) organisiert ist.

7. Elektronisches touristisches Sprechleitsystem nach Anspruch 1, dadurch gekennzeichnet, daß die konfigurierbare Tastatur (6) des Geräts (1) so ausgelegt ist, daß sie ständig die mit der durchquerten Zone verbundenen touristischen Themen anzeigt, und auch die Visualisierung des von der Sprechsynthesekette (7) ausgesprochenen Textes gestattet.

8. Elektronisches touristisches Sprechleitsystem nach Anspruch 1, dadurch gekennzeichnet, daß das Gerät (1) automatisch die Information mitteilt, die in der Datenbasis hieratisch als die wichtigste oder interessanteste des Orts, an dem sich das Gerät befindet, eingestuft ist.

9. Elektronisches touristisches Sprechleitsystem nach Anspruch 1 und 2, dadurch gekennzeichnet, daß der Lebendspeicher (11) des Geräts die von einem FM-Funksender oder Mobilfunksender (12) gesendeten Daten aufzeichnet.

10. Elektronisches touristisches Sprechleitsystem nach Anspruch 1, dadurch gekennzeichnet, daß in das Gerät (1) ein Bildschirm integriert ist, der in der Lage ist, die auf digitaler Platte (9) gespeicherten Bilder der verlangten touristischen Objekte anzuzeigen.

## Claims

1. Electronic tourist voice guide system consisting of a plurality of devices (1) incorporating:
- a system (2) for receiving signals transmitted by a constellation of satellites and allowing geographical localization,
- a system (3) for receiving radiofrequency signals,
- a digital optical disk drive (5),
- a configurable keypad equipped with an optionally touch-sensitive screen (6), characterized in that the said invention has a man-machine communication device essentially consisting of a voice synthesis and analysis, and recording system (7) which is capable of utilizing two information sources:
- a digital optical disk (9) or any other non-volatile bulk memory, on which are stored as a database the permanent tourist information such as: hotels, restaurants, architectural constructions, tourist sights, leisure establishments, supply and retail points, etc.,
- a radio message service which will provide the local information, particular to the regions travelled through, of relatively temporary nature, annoucements, advertisements, promotions, events, etc.,in such a way that the two aforementioned information sources are managed by a central processing unit (4) which will be provided, amongst other things, with a random-access memory (11), said random-access memory will selectively store the data from the bulk memory, such as a digital optical disk, while limitating itself to the zone in which the device (1), localized by the integrated global positioning receiver (2) is situated, as well as all the necessarily local data received from the radio message service.
The data set is classed by theme and stored in the random-access memory, and the user can, after an enquiry using the voice synthesis system, listen to the commentary relating to the theme chosen by the user regarding the zone in question.

2. Electronic tourist voice guide system according to claim 1, characterized in that cellular radio-telephone network supporting the radio message service (3), periodically dedicates one frequency in n, for very short periods of time, to send data of information re-updated in real time, such as: shows, sights, events, etc.

3. Electronic tourist voice guide system according to claim 1, characterized in that the device (1) has a memory (13) intended to store a message spoken by the user, with which the recording location will be automatically associated, so that, at the request of the user, the device automatically reproduces said message on reaching the locality of the recording.

4. Electronic tourist voice guide system according to claims 1 and 2, characterized in that the device (1) is localized using the identifying code continuously transmitted by the relay of the cellular radio transmitter (12) and associated with a correspondence table correlating, with each relay identified by its code, its geographical coverage zone.

5. Electronic tourist voice guide system according to claim 1, 2 and 3, characterized in that the device is localized, if the latter is without the satellite location system, or if the latter malfunctions, by analyzing the amplitude of the cellular radiotelephone signals (10) of the relays neighboring the closest relay.

6. Electronic tourist voice guide system according to claim 1, characterized in that the kinematics of the disk drive (5) is economized by virtue of the fact that the data relating to the zone concerned by the localization is recorded in the random-access memory (4).

7. Electronic tourist voice guide system according to claim 1, characterized in that the configurable keypad (6) of the device (1) is designed to display permanently the tourist themes connected with the zone travelled through, and also makes it possible to visualize the text spoken by the voice synthesis system (7).

8. Electronic tourist voice guide system according to claim 1, characterized in that the device (1) automatically communicates the information, hieratically classed in the data base as the most significant or the most interesting, of the location where the device is situated.

9. Electronic tourist voice guide system according to claim 1 and 2, characterized in that the random-access memory (11) of the device will record the data transmitted by an FM or cellular radio transmitter (12).

10. Electronic tourist voice guide system according to claim 1, characterized in that the device (1) incorporates a screen capable of displaying the images, stored on digital disk (9), of the tourist subjects requested.
